# FASCICULE DE BREVET EUROPEEN

(11) **EP 1 354 241 B1**
(45) Date de publication et mention de la délivrance du brevet: **11.04.2007**
(21) Numéro de dépôt: 02700322.7
(22) Date de dépôt: 14.01.2002
(51) Int. Cl.: G02F 1/335, F21V 8/00, G02B 27/28, H04N 9/31

(54) **SYSTEME DE PROJECTION OU DE VISUALISATION D'IMAGE**
SYSTEM ZUR BILDANZEIGE ODER BILDPROJEKTION
IMAGE PROJECTION OR DISPLAY SYSTEM

(30) Priorité: 24.01.2001 FR 0100908
(43) Date de publication de la demande: 22.10.2003
(73) Titulaire: Thomson Licensing, 92100 Boulogne-Billancourt (FR)
(72) Inventeur: DRAZIC, Valter, F-35830 Betton (FR); BATTAREL, Denis, 22300 LANNION (FR)
(74) Mandataire: Ruellan-Lemonnier, Brigitte
(86) Numéro de dépôt international: PCT/FR2002/000125
(87) Numéro de publication internationale: WO 2002/059687

(56) Documents cités:
- EP-A- 1 120 682
- EP-A- 1 122 580
- US-A- 5 777 789
- US-A- 5 860 721
- US-A- 5 884 991
- US-A- 6 053 615
- US-A- 6 139 156
- US-A- 6 139 157
- PATENT ABSTRACTS OF JAPAN vol. 1997, no. 06, 30 juin 1997 (1997-06-30) -& JP 09 033881 A (FUJI PHOTO OPTICAL CO LTD), 7 février 1997 (1997-02-07)

## Description

La présente invention concerne un système de projection ou de visualisation d'images, plus particulièrement un système de ce type comportant un dispositif d'éclairement à intégrateur optique.

Pour la projection ou la visualisation d'images, il est connu d'utiliser un imageur constitué par exemple par une valve optique telle qu'un système à cristaux liquides de type transmissif ou réflectif dont on commande la transparence de chaque élément formateur d'images en fonction de la luminance de chaque point de l'image à former.

Dans le cas de la projection, l'énergie lumineuse est fournie par un dispositif d'éclairement constitué le plus souvent d'une lampe et d'un réflecteur qui renvoie les rayons lumineux en direction de la valve optique.

Pour que l'image projetée ou visualisée restitue correctement l'image formée dans la valve, il est nécessaire que l'éclairement de l'imageur soit uniforme et soit réalisé avec un flux lumineux élevé, car il y a beaucoup de pertes de lumière dans le système. Ce problème n'est pas facile à résoudre, notamment parce que l'éclairement provient d'une source d'étendue limitée et aussi parce que la source d'éclairement est constituée par une lumière non polarisée. Or, les valves à cristaux liquides fonctionnent en lumière polarisée, ce qui nécessite l'utilisation de polariseurs en entrée et en sortie de la valve. Ces polariseurs diminuent fortement le flux lumineux en sortie du système.

Plusieurs solutions ont été proposées pour remédier aux inconvénients ci-dessus.

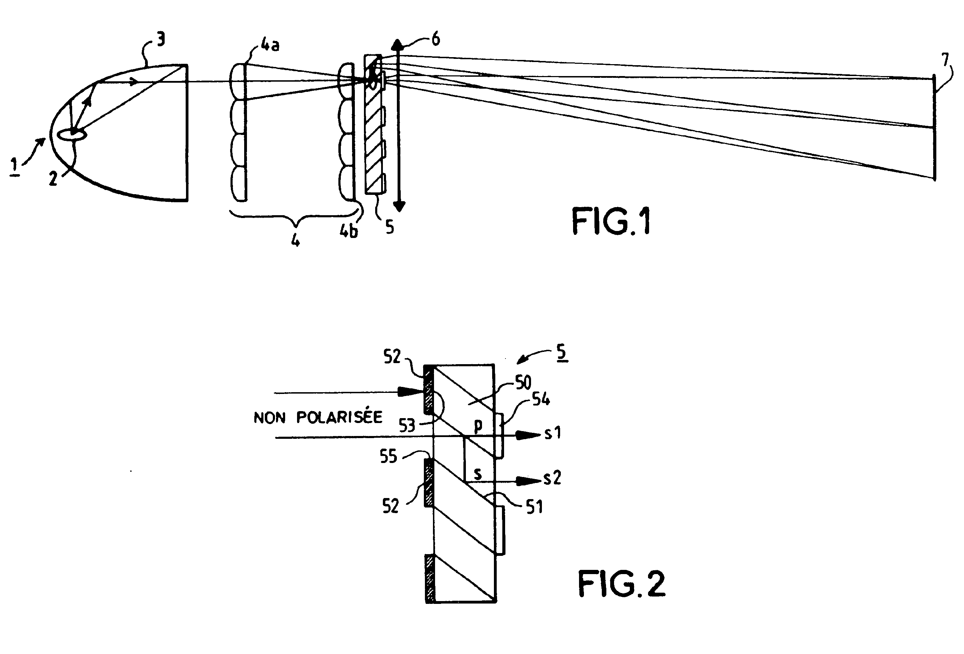

Une première solution consiste à utiliser un intégrateur optique associé à un séparateur de polarisation. Un exemple de cette solution est représenté sur la figure 1. Dans cet exemple, le moyen d'éclairement 1 est constitué par une source lumineuse 2 associée à un réflecteur 3. Les faisceaux lumineux représentés par la flèche f réfléchis par le réflecteur 3 sont collectés par un intégrateur 4 qui sera décrit plus en détail ci-après. Le réflecteur 3 peut être constitué par un réflecteur parabolique qui sera associé à une lentille convergente ou par un réflecteur elliptique, la source se trouvant à l'un des foyers de l'ellipse. L'intégrateur 4 est constitué par deux matrices 4 a et 4 b de lentilles qui ont le même rapport longueur sur largeur que l'imageur. Les lentilles de la seconde matrice 4b sont disposées de façon telle qu'elles forment l'image des lentilles de la première matrice 4a sur l'imageur 7. D'autre part, dans le mode de réalisation de la figure 1, un séparateur de polarisation ou PBS 5 est prévu en sortie de l'intégrateur 4.Le PBS qui sera décrit plus en détail ci-après est positionné de telle sorte que les images réelles des sources formées par la première matrice 4a de lentilles de l'intégrateur 4 se forment de manière alternative dans chaque second élément trapézoïdal du PBS. Comme représenté sur la figure 2, le séparateur de polarisation ou PBS 5 utilisé dans ce cas est constitué par une rangée d'éléments 50 séparés chacun par un élément 51 transmettant la lumière. L'élément 50 réalisé en un matériau transmettant la lumière est un élément de forme trapézoïdale qui peut éventuellement comporter sur la face recevant la lumière, une couche absorbante 52 et sur une des faces latérales un film mince 53 réalisant la séparation de polarisation. Il comporte sur la face opposée à la face d'entrée un film demi-onde 54 transformant une polarisation p en une polarisation s et sur la face 53, un film 55 réfléchissant une polarisation sans la modifier. Ces divers éléments sont bien connus de l'homme de l'art et ne seront pas décrits plus en détail.

La rangée PBS 5 de la figure 2 fonctionne donc de la manière décrite ci-après. La lumière non polarisée arrivant sur la face d'entrée de l'élément transparent 51 est séparée par le film séparateur de polarisation 53 de telle sorte qu'il transmette une lumière polarisée p dans l'élément 50 et réfléchisse la lumière polarisée s dans l'élément 51. La lumière polarisée transmise est alors transformée en une lumière polarisée s par le film demi-onde 54 donnant le faisceau référencé s1 sur la figure 2. D'autre part, la lumière réfléchie dans l'élément 51 vient se réfléchir sur la face 54 de l'élément 50 suivant et sort sous forme d'un faisceau polarisé s référencé s2. Pour obtenir des faisceaux s1 et s2 parallèles, les côtés 54 et 53 sont inclinés à 45° par rapport à la direction du faisceau lumineux. On peut aussi obtenir un faisceau de sortie polarisé en p si le film demi-onde est placé sur l'élément 51 au lieu de l'élément 50.

Dans le système représenté sur la figure 1, le séparateur de polarisation 5 est suivi d'une lentille 6 qui superpose les images des lentilles de la première matrice 4a sur un imageur 7 constitué, par exemple, par une valve à cristaux liquides. Dans ce cas, l'imageur est éclairé de manière uniforme par un faisceau correctement polarisé.

Toutefois, le système requiert l'utilisation d'une lentille de champ devant la valve à cristaux liquides dont l'utilité est de former les images des sources dans la pupille d'entrée de l'objectif. Or, cette lentille est gênante, notamment dans le cas d'un système où l'imageur est de type réflectif, pour des raisons d'encombrement.

D'autre part, il est impossible, dans un tel système, de produire un éclairement de l'imageur de type télécentrique. Un éclairement est télécentrique lorsque, en tout point de l'imageur, le rayon principal est perpendiculaire à la surface de l'imageur. Une telle caractéristique de l'éclairement présente deux avantages principaux :
1) il n'est plus nécessaire d'avoir une lentille de champ,
2) Les rayons principaux étant tous orientés parallèlement à l'axe optique, il n'y aura pas de problème de variation spatiale de couleur sur l'écran due à la traversée par la lumière des miroirs dichroïques de séparation de couleurs.

De plus, avec le système décrit ci-dessus, il n'est pas possible de modifier la surface d'éclairement pour pouvoir s'adapter à des valves de taille différente.

Pour remédier au problème d'uniformité d'éclairement de l'imageur, il a aussi été proposé d'utiliser un tube-intégrateur en sortie du dispositif d'éclairement. L'objet de ce tube est de mélanger la lumière provenant de la source pour produire un éclairage uniforme de l'imageur. Le tube-intégrateur est choisi de sorte que sa face de sortie présente le même rapport longueur sur largeur que l'imageur à savoir un rapport 4:3 ou 16:9 lorsque le système est utilisé par exemple en télévision. Dans ce système, l'image de la face d'extrémité du tube intégrateur est formée sur l'imageur avec l'aide d'un système de lentilles. Ce système présente l'avantage d'éclairer l'imageur de manière beaucoup plus uniforme et avec un faisceau ayant le même rapport longueur sur largeur que l'imageur. Toutefois lorsque l'imageur est constitué par une valve à cristaux liquides, il est nécessaire d'utiliser des polariseurs qui absorbent plus de 50% de la lumière avant qu'elle n'atteigne l'imageur. Cette lumière absorbée est de plus transformée en chaleur, ce qui peut entraîner une destruction des propriétés du polariseur.

La présente invention a donc pour but de proposer un nouveau système qui permet d'obtenir un éclairage uniforme avec un flux lumineux plus important et moins de dissipation thermique.

La présente invention a encore pour but de proposer un nouveau système qui s'adapte facilement à plusieurs tailles de valves optiques.

La présente invention a donc pour objet un système de projection ou de visualisation d'images tel que décrit dans les revendications ci-jointes.

Un tel système permet entre autre d'optimiser la taille de l'éclairement en fonction des tolérances de placement de la valve de manière à obtenir un flux maximal.

D'autres caractéristiques et avantages de la présente invention apparaîtront à la lecture de la description faite ci-après, cette description étant faite avec référence aux dessins annexés dans lesquels :
la figure 1 déjà décrite est une vue schématique d'un système de projection comportant un système d'éclairage à intégrateur optique selon l'art antérieur,
la figure 2 est une vue schématique en coupe d'une rangée d'éléments séparateurs de polarisation ou PBS,
les figure 3A et 3B sont des vues schématiques d'un système de projection comportant un dispositif d'éclairement avec un intégrateur optique conforme à la présente invention, avec différentes positions pour la lentille mobile,
les figures 4 et 5 sont des vues partielles des éléments de la figure 3 permettant d'expliquer le fonctionnement de la présente invention,
la figure 6 représente les positions des sources multiples créées avec le système de la figure 5,
les figures 7A et 7B sont des vues schématiques des systèmes de lentilles entourant le PBS représentés respectivement sur les figures 3A et 3B,
les figures 8A et 8B sont des vues en perspective schématique d'un autre mode de réalisation du conduit lumineux,
les figures 9A et 9B montrent schématiquement le trajet des faisceaux dans un conduit du type de celui de la figure 8a et,
la figure 10 représente la position des sources multiples virtuelles obtenue avec le système des figures 9A et 9B.

Pour simplifier la description dans les figures les mêmes éléments portent les mêmes références.

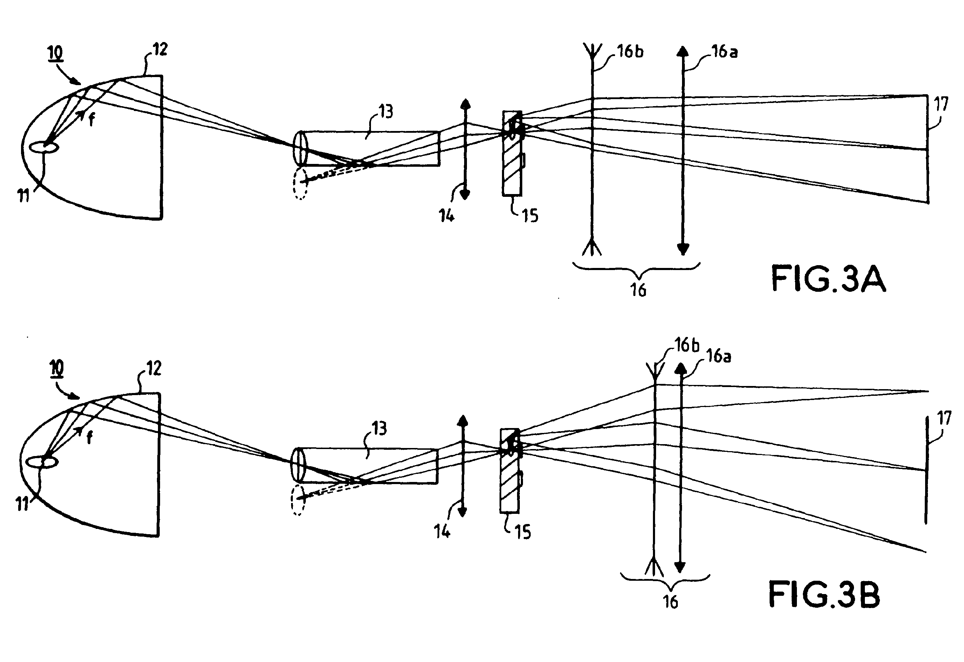

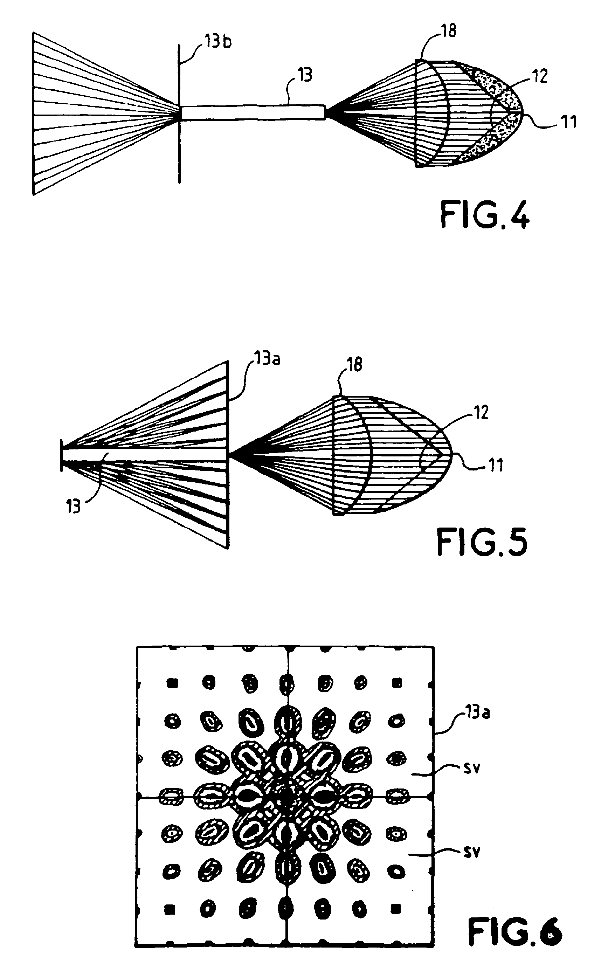

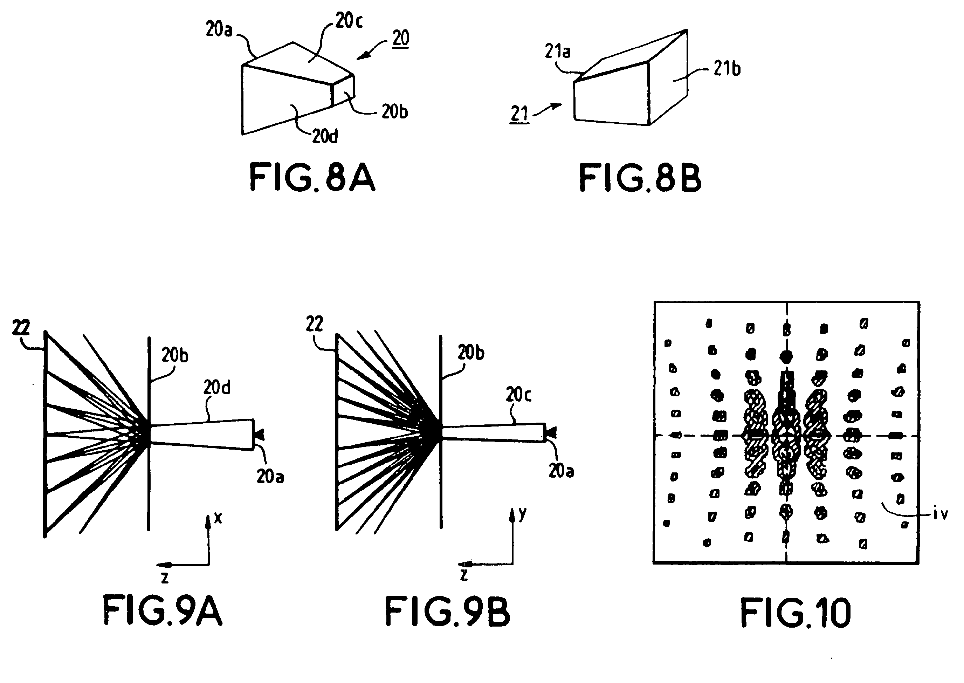

On décrira tout d'abord, avec référence aux figures 3A et 3B, un mode de réalisation d'un système de projection conforme à la présente invention. De manière schématique, le système conforme à la présente invention comporte un dispositif d'éclairement 10 constitué par une source 11 et un réflecteur 12 qui renvoie les rayons en direction d'un imageur 17. Conformément à la présente invention, après le réflecteur 12 est prévu un système intégrateur optique constitué par un conduit lumineux intégrateur 13. En sortie du conduit sont prévus une première lentille 14 puis un séparateur de polarisation ou PBS 15, un second ensemble de lentilles 16 et l'imageur 17. On décrira maintenant, de manière plus détaillée, les différents éléments du système. Dans le mode de réalisation représenté, la source lumineuse 11 est constituée par une lampe à décharge, lampe à arc de type Xénon ou MHL. Les rayons lumineux issus de la source 11 sont renvoyés en direction de l'imageur 17 par un réflecteur 12. Le réflecteur 12 peut être un réflecteur parabolique associé à une lentille convergente placée en sortie du réflecteur parabolique pour focaliser les rayons réfléchis en direction du conduit intégrateur 13. Le réflecteur peut aussi être constitué par un réflecteur elliptique la source lumineuse se trouvant au niveau du premier point focal de l'ellipse tandis que la face d'entrée du conduit lumineux 13 est positionnée dans le plan du second point focal de l'ellipse. Le conduit lumineux 13 est, dans le mode de réalisation représenté, constitué par un parallélépipède rectangle, à savoir un tube dont la section de sortie présente le même rapport longueur sur largeur que l'imageur. Ce tube comporte quatre faces réfléchissantes. Il est rempli d'air. Le conduit lumineux peut aussi être constitué par un barreau en verre fonctionnant en réflexion interne totale. La longueur du tube est choisie de manière à obtenir une uniformité d'éclairage en sortie du tube, la lumière en entrée se propageant par réflexion multiple jusqu'à l'extrémité du tube comme cela est représenté notamment sur les figures 9. Les rayons lumineux issus du conduit lumineux 13 sont dirigés vers un séparateur de polarisation ou PBS 15 par l'intermédiaire d'un système de lentilles 14 qui sera décrit plus en détail ci-après. Le séparateur de polarisation 15 est constitué par une rangée d'éléments tels que ceux décrits avec référence à la figure 2. Le système de lentilles 14 réalise l'imagerie de la matrice des sources virtuelles (figures 5 et 6) obtenues lors de la réflexion multiple à l'intérieur du conduit sur la rangée d'éléments séparateurs de polarisation comme cela sera décrit de manière plus détaillée ci-après. Les rayons lumineux polarisés s ou p issus du PBS 15 sont envoyés à travers un système de lentilles 16 sur l'imageur 17 qui dans le mode de réalisation représenté, est constitué d'une valve à cristaux liquides. Le système de lentille 16 comporte, conformément à l'invention, une lentille fixe 16a et une lentille mobile 16b qui ensemble imagent la sortie 13b du conduit de lumière sur l'imageur 17. La lentille mobile fait varier le grandissement de la taille du rectangle lumineux qui éclaire l'imageur et la lentille fixe concentre le faisceau sur ce dernier. Dans le mode de réalisation de la figure 3A, la lentille 16b est positionnée près du PBS15 et éclaire un imageur de taille plus faible que dans le cas de la figure 3B où la lentille 10b est proche de la lentille 16a.

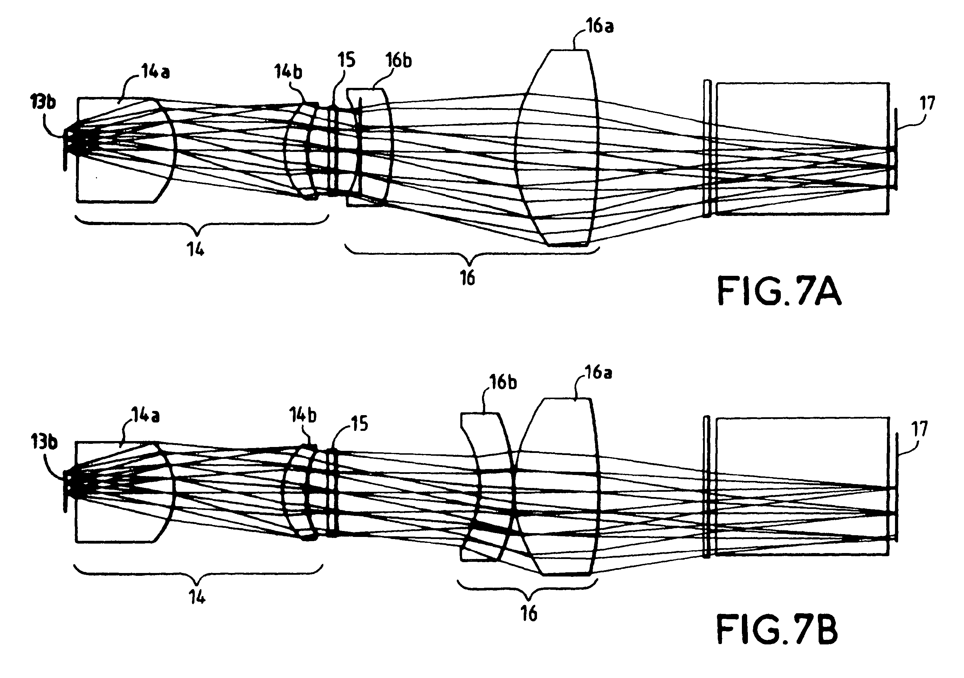

Le principe de fonctionnement de la présente invention sera expliqué plus particulièrement avec référence aux figures 4, 5 et 6. Dans ces figures, les éléments représentés portent les mêmes références que les éléments semblables de la figure 3. Le réflecteur utilisé est un réflecteur parabolique 12 et il est associé avec une lentille de convergence 18 de manière à envoyer les rayons lumineux réfléchis par le réflecteur 12 en entrée du conduit lumineux 13. Dans le conduit lumineux 13, il se produit des réflexions multiples et la lumière sortant du conduit lumineux 13 en 13b est mélangée comme représenté sur la figure 4. Toutefois si l'on regarde d'où viennent les rayons qui sortent de 13b en remontant le long de chacun d'eux au niveau de la face d'entrée du conduit 13, positionnée dans le plan focal de la lentille 18, on observe au niveau du plan d'entrée 13a une série de sources multiples. Ces sources multiples peuvent être visualisées en défocalisant la sortie du conduit lumineux à l'aide d'un programme de tracé de rayons éliminant les parois latérales et positionnant un miroir à la sortie du conduit lumineux. Ces sources virtuelles, comme représentées sur la figure 3, ont été générées lors des différentes réflexions à l'intérieur du conduit. Ces sources virtuelles multiples SV sont positionnées, comme représenté sur le schéma de rayonnement de la figure 6. Conformément à la présente invention, la rangée virtuelle des sources SV positionnée sur le côté entrée du conduit lumineux est imagée sur la rangée PBS 15 tandis que le côté sortie du conduit lumineux qui forme une ouverture rectangulaire éclairée de manière uniforme sera imagé directement sur l'imageur 17. Ceci est obtenu notamment à l'aide des systèmes de lentilles 14 et 16 représentés sur les figures 7A et 7B. Le fait d'utiliser un système de lentilles formant l'image de la sortie 13b permet d'obtenir un flux lumineux élevé sur l'imageur avec peu de pertes, ce flux étant correctement polarisé du fait de l'utilisation du PBS 15. Comme représenté sur les figures 7A et 7B, le système de lentilles 14 formant les images des sources virtuelles est constitué d'une première lentille 14a et d'une seconde lentille 14b complémentaire de la lentille 14a. Dans la réalisation particulière illustrée par les figures 7, le système de lentilles 14 forment un collimateur dont la pupille est à l'extérieur du groupe 14. Il comporte aussi en sortie du PBS un système de lentilles 16 comportant une lentille fixe 16a et une lentille mobile 16b dont le rôle a été expliqué ci-dessus. La lentille fixe 16a concentre les rayons sur l'imageur et la lentille mobile 16b fait varier le grandissement de l'image de 13b.

Avec le système décrit ci -dessus, on obtient une uniformité et un rendement de l'éclairement élevés et on adapte de manière optimale la taille de l'éclairement à différentes tailles d'imageurs. D'autre part, dans une étape finale, la lumière est transportée sur la pupille d'entrée de la lentille de projection. Comme l'éclairage de l'imageur est réalisé de manière à être télécentrique, il n'est pas nécessaire d'utiliser une lentille de champs. De plus, dans un tel système il est possible d'insérer un cube séparateur de couleurs entre l'imageur 17 et le système de lentilles 16 de manière à éclairer trois imageurs, un pour chaque couleur. La recombinaison des couleurs est effectuée juste avant la lentille de projection par un autre cube séparateur de couleurs. L'avantage de ce système est que l'éclairage du cube séparateur de couleurs est presque télécentrique entraînant peu de décalage de couleurs sur l'écran.

On décrira maintenant un mode de réalisation pratique du système ci-dessus. Ce mode a été utilisé pour les simulations.

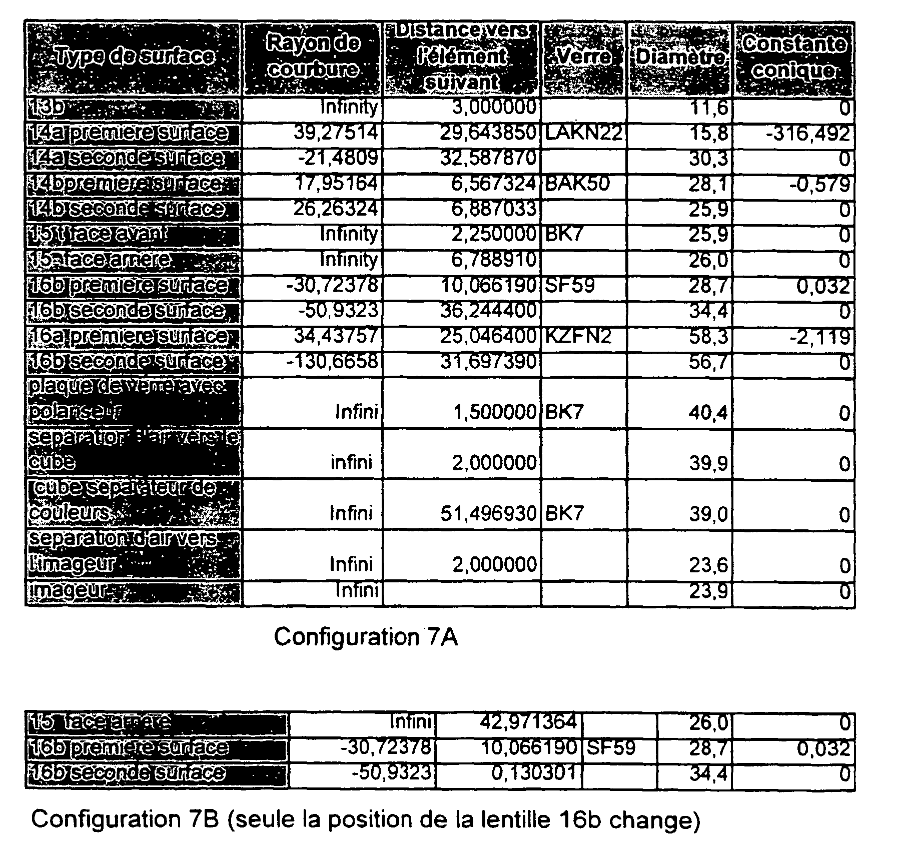

On décrira maintenant avec référence aux figures 8 à 10 un autre mode de réalisation du conduit lumineux. Comme représenté sur les figures 8A et 8B, le conduit lumineux 20 et 21 peut être constitué par une pyramide tronquée de section rectangulaire ou carrée selon la section de l'imageur.

Sur la figure 8A, le conduit lumineux 20 présente une section d'entrée 20a plus grande que la section de sortie 20b tandis que sur la figure 8B, le conduit lumineux 21 présente une section d'entrée 21a plus petite que la section de sortie 21b. Dans les deux cas, les angles des parois 20c, 20d et 21c, 21d sont légèrement inclinés, ce qui permet de contrôler exactement le placement des sources dans le séparateur de polarisation ou PBS de manière à passer un flux optimal.

Sur les figures 9a et 9b qui représentent respectivement une vue en coupe selon Zx et Zy du conduit lumineux 20 de la figure 8A, on a représenté le chemin des faisceaux lumineux en sortie 20b vers le PBS symbolisé par 22. La forme spécifique du conduit en horizontal (figure 9A) et en vertical (figure 9B) permet de déplacer les images virtuelles sv, comme représenté sur la figure 10, des sources les unes par rapport aux autres et aussi d'optimiser le placement des sources réelles dans le PBS.

Il est évident que le mode de réalisation décrit ci-dessus n'a été donné qu'à titre illustratif et peut être modifié sans sortie du cadre des revendications ci-après.

## Revendications

1. - Système de projection ou de visualisation d'images comportant un imageur (17) et un moyen d'éclairement de l'imageur comprenant une source lumineuse (11), des moyens (12) pour renvoyer le faisceau lumineux issu de la source en direction de l'imageur, un intégrateur optique (13,20,21), suivi de moyens séparateurs de polarisation (15), les moyens séparateurs de polarisation étant suivis d'un ensemble de lentilles (16) imageant la sortie des moyens séparateurs de polarisation sur l'imageur, **caractérisé en ce que** l'ensemble des lentilles (16) est télécentrique et au moins une des lentilles (16a) de l'ensemble (16) est mobile entre les moyens séparateurs de polarisation et l'imageur pour ajuster l'éclairement à la taille de l'imageur.

2. - Système selon la revendication 1, **caractérisé en ce que** l'intégrateur est constitué par un conduit lumineux, le conduit lumineux étant suivi de moyens (14) pour renvoyer vers l'imageur les sources d'éclairement virtuelles lors de la réflexion du faisceau lumineux à l'intérieur du conduit lumineux, lesdits moyens (14) réalisant une imagerie des sources virtuelles sur les moyens séparateurs de polarisation (15).

3. - Système selon la revendication 2, **caractérisé en ce que** le conduit lumineux (13,20,21) est du type réflectif.

4. - Système selon les revendications 2 ou 3, **caractérisé en ce que** le conduit lumineux est de forme parallélépipédique ou pyramidale tronquée.

5. - Système selon les revendications 2 ou 3, **caractérisé en que** le conduit lumineux est formé par un tube creux dont les parois internes sont des miroirs ou par un barreau plein en un matériau tel que du verre fonctionnant en réflexion interne totale.

6. - Système selon l'une quelconque des revendications 2 à 5, **caractérisé en ce que** les sections du conduit lumineux ont le même rapport longueur sur largeur que l'imageur.

7. - Système selon l'une quelconque des revendications 2 à 6, **caractérisé en ce que** la face d'entrée du conduit lumineux est positionnée dans le plan focal des moyens (12) pour renvoyer le faisceau lumineux issu de la source en direction de l'imageur.

8. - Système selon la revendication 7, **caractérisé en ce que** les moyens (12) pour renvoyer le faisceau lumineux issu de la source en direction de l'imageur sont constitués par un réflecteur elliptique ou par un réflecteur parabolique associé à une lentille convergente.

9. - Système selon l'une des revendications 2 à 8, **caractérisé en ce que** les moyens pour renvoyer les sources d'éclairement virtuelles sont constitués par un ensemble d'au moins une lentille (14).

10. - Système selon l'une des revendications précédentes, **caractérisé en ce que** les moyens séparateurs de polarisation sont constitués par une rangée formée d'éléments séparateur de polarisation en film mince associés à un film demi-onde pour transformer en une seule polarisation l'ensemble du faisceau lumineux non polarisé.

11. - Système selon la revendication 9 **caractérisé en ce que** l'ensemble (14) d'au moins une lentille des moyens pour renvoyer les sources d'éclairement virtuelles est télécentrique du côté des moyens séparateurs de polarisation.

12. - Système selon l'une des revendications précédentes, **caractérisé en ce que** l'imageur est une valve optique à cristaux liquides.

## Claims

1. A system for projecting or visualizing images, having an imager (17) and a means for illuminating the imager comprising a light source (11), means (12) for directing the light beam coming from the source toward the imager, an optical integrator (13, 20, 21) followed by polarization splitter means (15), the polarization splitter means being followed by a set of lenses (16) imaging the output of the polarization splitter means onto the imager, **characterized in that** the set of lenses (16) is telecentric and at least one of the lenses (16a) of the set (16) can be moved between the polarization splitter means and the imager in order to adjust the illumination to the size of the imager.

2. The system as claimed in claim 1, **characterized in that** the integrator consists of a light guide, the light guide being followed by means (14) for directing the virtual illumination sources toward the imager during the reflection of the light beam inside the light guide, said means (14) carrying out imaging of the virtual sources onto the polarization splitter means (15).

3. The system as claimed in claim 2, **characterized in that** the light guide (13, 20, 21) is of the reflective type.

4. The system as claimed in claims 2 or 3, **characterized in that** the light guide is of parallelepipedal or truncated-pyramidal shape.

5. The system as claimed in claims 2 or 3, **characterized in that** the light guide is formed by a hollow tube, the internal walls of which are mirrors, or by a solid bar of a material such as glass operating in total internal reflection.

6. The system as claimed in any one of claims 2 to 5, **characterized in that** the cross sections of the light guide have the same length-to-width ratio as the imager.

7. The system as claimed in any one of claims 2 to 6, **characterized in that** the input face of the light guide is positioned in the focal plane of the means (12) for directing the light beam coming from the source toward the imager.

8. The system as claimed in claim 7, **characterized in that** the means (12) for directing the light beam coming from the source toward the imager consist of an elliptical reflector or of a parabolic reflector associated with a converging lens.

9. The system as claimed in one of claims 2 to 8, **characterized in that** the means for directing the virtual illumination sources consist of a set of at least one lens (14).

10. The system as claimed in one of the preceding claims, **characterized in that** the polarization splitter means consist of a row formed by thin-film polarization splitter elements that are associated with a half-wave film for converting all of the unpolarized light beam into a single polarization.

11. The system as claimed in claim 9, **characterized in that** the set (14) of at least one lens of the means for directing the virtual illumination sources is telecentric on the side where the polarization splitter means are.

12. The system as claimed in one of the preceding claims, **characterized in that** the imager is a liquid-crystal optical valve.

## Patentansprüche

1. System zur Projektion oder zur Sichtbarmachung von Bildern mit einem Bildgenerator (17) und einem Mittel zur Beleuchtung des Bildgenerators mit einer Lichtquelle (11), Mitteln (12), um den Lichtstrahl aus der Quelle in Richtung des Bildgenerators zurückzuwerfen, einem optischen Integrator (13, 20, 21) mit nachfolgenden Polarisationstrennmitteln (15), wobei die Polarisationstrennmittel von einer Anordnung von Linsen (16) gefolgt werden, die den Austritt der Polarisationstrennmittel auf dem Bildgenerator abbilden, **dadurch gekennzeichnet, dass** die Anordnung der Linsen (16) telezentrisch ist und mindestens eine der Linsen (16a) der Anordnung (16) zwischen den Polarisationstrennmitteln und dem Bildgenerator beweglich ist, um die Beleuchtung an die Größe des Bildgenerators anzupassen.

2. System nach Anspruch 1, **dadurch gekennzeichnet, dass** der Integrator durch einen Lichtkanal gebildet ist, wobei der Lichtkanal von Mitteln (14) gefolgt wird, um bei der Reflexion des Lichtstrahls im Inneren des Lichtkanals die virtuellen Beleuchtungsquellen zu dem Bildgenerator zurückzustrahlen, wobei die Mittel (14) eine Abbildung der virtuellen Quellen auf den Polarisationstrennmitteln (15) verwirklichen.

3. System nach Anspruch 2, **dadurch gekennzeichnet, dass** der Lichtkanal (13, 20, 21) reflexiv ist.

4. System nach den Ansprüchen 2 oder 3, **dadurch gekennzeichnet, dass** der Lichtkanal parallelepipedisch ist oder die Form eines Pyramidenstumpfes aufweist.

5. System nach den Ansprüchen 2 oder 3, **dadurch gekennzeichnet, dass** der Lichtkanal durch ein Hohlrohr, dessen Innenwände Spiegel sind, oder durch einen Vollstab aus einem Material wie Glas, das durch totale interne Reflexion wirksam ist, gebildet ist.

6. System nach einem der Ansprüche 2 bis 5, **dadurch gekennzeichnet, dass** die Querschnitte des Lichtkanals dasselbe Längen/Breite-Verhältnis aufweisen wie der Bildgenerator.

7. System nach einem der Ansprüche 2 bis 6, **dadurch gekennzeichnet, dass** die Eintrittsseite des Lichtkanals in der Fokalebene der Mittel (12) zum Zurückwerfen des Lichtstrahls aus der Quelle in Richtung des Bildgenerators positioniert ist.

8. System nach Anspruch 7, **dadurch gekennzeichnet, dass** die Mittel (12) zum Zurückwerfen des Lichtstrahls aus der Quelle in Richtung des Bildgenerators durch einen elliptischen Reflektor oder durch einen parabolischen, zu einer konvergierenden Linse zugeordneten Reflektor gebildet sind.

9. System nach einem der Ansprüche 2 bis 8, **dadurch gekennzeichnet, dass** die Mittel zum Zurückstrahlen der virtuellen Beleuchtungsquellen durch eine Anordnung von mindestens einer Linse (14) gebildet sind.

10. System nach einem der vorhergehenden Ansprüche, **dadurch gekennzeichnet, dass** die Polarisationstrennmittel durch eine Reihe von einen dünnen Film bildenden, zu einem Halbwellenfilm zugeordneten Polarisationstrennelementen gebildet sind, um den gesamten nicht polarisierten Lichtstrahl mit einer einzigen Polarisation umzuwandeln.

11. System nach Anspruch 9, **dadurch gekennzeichnet, dass** die Anordnung (14) von mindestens einer Linse Mittel zum Zurückstrahlen der virtuellen Beleuchtungsquellen telezentrisch seitens der Polarisationstrennmittel ist.

12. System nach einem der vorhergehenden Ansprüche, **dadurch gekennzeichnet, dass** der Bildgenerator ein optisches Flüssigkristallventil ist.
